# FASCICULE DE BREVET EUROPEEN

(11) **EP 0 719 729 B1**
(45) Date de publication et mention de la délivrance du brevet: **07.04.1999**
(21) Numéro de dépôt: 95402761.1
(22) Date de dépôt: 07.12.1995
(51) Int. Cl.: C01B 13/10, C01B 13/11

(54) **Procédé et installation de traitement d'un mélange gazeux comprenant de l'ozone**
Verfahren und Vorrichtung zur Behandlung einer Ozon enthaltender Gasmischung
Method and apparatus for treatment of a gas mixture containing ozone

(30) Priorité: 27.12.1994 FR 9415716
(43) Date de publication de la demande: 03.07.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Gastiger, Michel, F-91400 Orsay (FR); Renault, Philippe, F-78000 Versailles (FR)
(74) Mandataire: Vesin, Jacques

(56) Documents cités:
- EP-A- 0 178 415
- DE-A- 3 628 236
- US-A- 2 872 397

## Description

L'invention concerne un procédé de traitement d'un mélange gazeux comprenant de l'ozone, en vue d'obtenir en sortie de procédé, un gaz de production dont la concentration en ozone est supérieure à la concentration initiale dans le mélange gazeux.

L'ozone, du fait de son grand pouvoir d'oxydation, a été très largement évoqué et testé pour de nombreuses applications parmi lesquelles : le traitement des eaux, la désinfection, des opérations de blanchiment, ou encore comme réactif dans la fabrication de peroxydes et autres acides organiques.

Ce composé est traditionnellement obtenu à partir de mélanges contenant de l'oxygène, dans un plasma froid du type décharge couronne.

On obtient alors à l'état stationnaire, un mélange dont la concentration en ozone est relativement faible (typiquement quelques % volumiques), le rendement en ozone étant sensiblement amélioré lorsque l'on augmente la concentration en oxygène du mélange initialement traité.

Durant plusieurs dizaines d'années, de nombreux travaux ont été effectués et publiés, tendant à augmenter la quantité d'ozone produite dans un milieu gazeux ou encore à la concentrer. Ces travaux avaient un double objectif : compte tenu des applications visées, augmenter la cinétique d'oxydation observée, mais aussi par ailleurs, essayer de séparer l'oxygène contenu dans le mélange produit, de façon à le recycler, cela tant pour des raisons économiques que pour des raisons liées à la sécurité.

Les méthodes envisagées par ces différents travaux peuvent être divisées en deux catégories :
- une première catégorie où l'on a tenté d'augmenter la quantité d'ozone produite en jouant sur l'opération d'ozonisation elle-même, et
- une seconde catégorie où l'on a retravaillé le mélange produit par l'ozoneur.

Pour la première catégorie de méthodes, on peut citer un premier exemple concernant l'utilisation d'oxygène pur en remplacement de l'air, qui multiplie les concentrations en ozone obtenues dans le mélange produit par un facteur voisin de deux.

On peut encore citer dans cette première catégorie, d'autres travaux visant à jouer sur les paramètres géométriques de l'électrode de la décharge couronne ou bien encore sur les paramètres électrotechniques de la décharge.

Pour la seconde catégorie de méthodes, de nombreux travaux ont été effectués ces trente dernières années, liés à la capacité d'adsorption de l'ozone sur certains supports (tout particulièrement le gel de silice). Ces travaux mettaient en oeuvre des cycles d'adsorption de l'ozone produit par l'ozoneur lors du passage du mélange sur le support, et la désorption de cet ozone adsorbé par tirage sous vide ou par l'utilisation d'un gaz de balayage (de l'air ou de l'azote).

Pour le cas d'une phase de désorption par tirage sous vide, donnant lieu à la production d'un mélange gazeux de haute pureté en ozone, voire d'ozone pur, on peut citer le cas des documents EP-A-103,144, ou encore EP-A-178,415. Il faut noter que la mise en oeuvre d'une phase de désorption par tirage sous vide représente une certaine complication mais aussi un surcoût de mise en oeuvre.

Au demeurant, l'obtention de mélanges très concentrés en ozone, voire d'ozone pur, n'est pas toujours ni utile ni souhaitable, notamment pour des raisons de sécurité.

Pour ce qui est des méthodes mettant en oeuvre une opération de désorption à l'aide d'un gaz de balayage, on peut citer les documents FR-A-2,580,271, ainsi que l'article publié lors du huitième congrès mondial sur l'ozone s'étant tenu le 15-18 décembre 1987 à Zurich (Editions Unionsverlag, Zurich, pages A72 à A86), tous deux au nom de la Demanderesse, où est proposé un procédé de production d'ozone du type précité (cycles d'adsorption/désorption), l'opération de désorption étant obtenue par un balayage d'air ou d'azote. L'article signale d'ailleurs la possibilité d'obtenir un léger effet de concentration (concentration d'ozone du mélange gazeux produit légèrement supérieure à la concentration d'ozone du mélange issu de l'ozoneur), cela en jouant sur la différence de pression adoptée pour les phases de désorption et d'adsorption. Il est cependant à noter que le rapport de pression que l'on peut mettre en oeuvre étant nécessairement réduit, l'effet de concentration obtenu est également limité.

On peut encore citer dans cette catégorie de désorption par balayage gazeux, les travaux de la société Union Carbide Corporation, rapportés dans le document US-A-2,872,397, où des opérations successives d'adsorption de l'ozone et de désorption à l'aide de gaz tels que l'air, l'azote, CF₄, ou encore CO₂, les résultats fournis concernant une désorption à l'azote montrent qu'il est possible de récupérer selon ce document environ 90% de l'ozone produit par l'ozoneur.

Toujours dans cette seconde catégorie de méthodes où l'on retravaille le mélange O₂/O₃ produit, on peut encore citer le cas où l'on piège ce mélange dans de l'azote liquide, la séparation ultérieure des deux composants étant effectuée par distillation. On peut alors faire dans ce dernier cas, les même remarques que celles qui avaient déjà été effectuées plus haut pour la concentration par tirage sous vide après l'étape d'adsorption (i.e. complexité, coût, sécurité, et inutilité bien souvent de disposer d'un mélange si concentré en ozone).

L'objectif de la présente invention est de proposer un procédé de traitement d'un milieu gazeux comprenant de l'ozone (tel que par exemple obtenu en sortie d'un ozoneur ou bien encore provenant d'un stockage), dont les caractéristiques sont les suivantes :
- le procédé visé doit permettre d'obtenir un effet significatif de concentration (concentration en ozone en sortie de procédé supérieure à la concentration en ozone dans le milieu gazeux initial traité) tout en évitant toute utilisation de vide ou de basses pressions,
- ce procédé doit être facile et économique de mise en oeuvre (permettant donc notamment d'économiser de l'oxygène),
- il doit également présenter une excellente flexibilité et modulabilité, pour pouvoir, selon l'application visée, obtenir des concentrations d'ozone variables et ajustables depuis quelques % d'ozone dans un gaz vecteur jusqu'à plusieurs dizaines de % d'ozone dans ce gaz vecteur,
- il doit par ailleurs être compatible avec les impératifs de sécurité généralement suivis par les sites industriels.

Les travaux menés à bien par la Demanderesse ont montré qu'il était possible d'obtenir un tel phénomène de concentration, y compris dans les conditions contraignantes listées ci-dessus, par la mise en oeuvre combinée des étapes suivantes :
- une étape d'adsorption du milieu gazeux (par exemple du mélange produit par un ozoneur) sur un support adapté (en particulier le gel de silice),
- une étape de désorption de l'ozone adsorbé par un flux comprenant du CO₂.

Le point fondamental qu'ont mis en évidence ces travaux, est que le CO₂ n'agit pas comme un simple gaz vecteur de balayage (comme pouvait le faire l'azote ou l'air classiquement utilisés), mais qu'il crée un effet que l'on peut qualifier d'effet "piston" qui sera illustré plus loin dans le cadre d'exemples.

Le CO₂ s'adsorbant lui-même désorbe au fur et à mesure l'ozone précédemment adsorbé, poussant ainsi une espèce de front d'ozone qui progresse à l'intérieur de la réserve d'adsorbant.

Ces travaux ont par ailleurs démontré que la présence de CO₂ dans le gaz issu de l'étape de désorption, qui contient de l'ozone, a un effet très positif sur la stabilisation de la molécule d'ozone (limitation de sa décomposition), ce qui présente un intérêt, tant pour le cas où l'on souhaite stocker l'ozone dans un stockage gazeux intermédiaire, que pour le problème des canalisations industrielles. On a ainsi pu observer des gains de stabilité dans le CO₂ gazeux, en comparaison d'un stockage dans l'oxygène pur, par exemple après 17 heures, pouvant atteindre un facteur 3 selon les pressions pratiquées.

La Demanderesse a par ailleurs constaté qu'il était avantageux d'ajouter au gaz à traiter, avant son arrivée dans la bouteille d'adsorption, un gaz que l'on peut qualifier d'adjacent qui comprend du CO₂.

Le CO₂ intervient alors dans une telle configuration à la fois durant la phase d'adsorption et durant la phase de désorption.

La présence de CO₂ durant la phase d'adsorption permet notamment un meilleur contrôle et ajustement de la concentration d'ozone requise dans le gaz final.

Le procédé de traitement d'un gaz secondaire comprenant de l'ozone, selon l'invention, comprend alors les étapes suivantes :
a) on ajoute au gaz secondaire un gaz que l'on peut qualifier d'adjacent qui comprend du CO₂;
b) on fait passer le mélange de gaz secondaire et de gaz adjacent ainsi formé dans au moins une réserve d'adsorbant, où l'ozone est adsorbé en tout où partie;
c) on balaye la réserve d'adsorbant, à l'aide d'un gaz de désorption comprenant du CO₂, pour obtenir en sortie de la réserve un gaz de production comprenant de l'ozone, la concentration en ozone du gaz de production étant supérieure à la concentration en ozone du gaz secondaire.

Le résidu du mélange constitué par le gaz secondaire et le gaz adjacent, non-adsorbé, obtenu en sortie de la bouteille d'adsorption, est alors avantageusement évacué vers l'extérieur ou bien recyclé comme source d'O₂ par exemple à l'entrée de l'ozoneur (quand la source de gaz secondaire comprenant l'ozone est un ozoneur), ou bien comme source de CO₂ pour l'étape d'adsorption ou de désorption (notamment dans les cas où le mélange en question comprend peu d'oxygène).

Comme précédemment signalé, le gaz secondaire à traiter pourra par exemple avoir été obtenu en sortie d'un ozoneur, où a été traité un gaz primaire comprenant de l'oxygène, ou encore provenir d'un stockage intermédiaire.

Selon une des mises en oeuvre de l'invention, on aura, avant la phase d'adsorption b), procédé à une préparation (ou conditionnement) de l'adsorbant, en le balayant à l'aide d'un gaz de conditionnement qui comprend du CO₂.

Comme il apparaîtra clairement à l'homme du métier, le procédé selon l'invention peut être mis en oeuvre à l'aide de plusieurs réserves (on parle aussi souvent de bouteilles) d'adsorbant en parallèle, une des réserves d'adsorption étant par exemple en phase d'adsorption alors qu'une autre réserve, ayant précédemment subie la phase d'adsorption, se trouve en phase de désorption à l'aide d'un gaz de désorption, etc.

Dans le cas d'une source de gaz secondaire constituée par un ozoneur, le gaz primaire comprenant de l'oxygène pourra par exemple consister en de l'air, de l'oxygène pur, ou un mélange air/oxygène, ou encore un gaz tel qu'obtenu en sortie d'un générateur de séparation d'air par adsorption ou perméation.

La Demanderesse a pu constater qu'en vue d'améliorer la productivité en ozone de l'ozoneur, il était avantageux de traiter un mélange primaire contenant une certaine quantité d'azote, par exemple quelques %.

Le terme d' "ozoneur" doit s'envisager comme désignant tout type d'appareil produisant un mélange contenant de l'ozone à partir d'un mélange initial contenant de l'oxygène, comme c'est le cas par exemple des ozoneurs basés sur la création d'un plasma par décharge couronne.

La bouteille d'adsorbant sera avantageusement isolée thermiquement de l'atmosphère environnante, par exemple par des systèmes d'interparois remplies de matériaux tels que la perlite, le cas échéant mises sous vide, tel que couramment pratiquées dans l'industrie du stockage de liquides cryogéniques.

Selon le résultat recherché, le gaz secondaire pourra être utilisé tel que, provenant de la source de gaz secondaire, donc le plus souvent à une température proche de la température ambiante. Il pourra aussi, selon une des mises en oeuvre de l'invention, être refroidi avant son arrivée dans la réserve d'adsorption.

La température du gaz secondaire refroidi sera alors avantageusement comprise dans l'intervalle entre -80°C et 10°C, voire même dans l'intervalle entre -80°C et 0 °C.

L'étape de refroidissement pourra s'effectuer avant ou après l'adjonction de gaz adjacent.

Ce refroidissement pourra s'effectuer par exemple par des moyens classiques tels que froid mécanique, échangeur sur liquide cryogénique, ou encore opération de détente sur une turbine.

On pourra également envisager des échangeurs gaz/gaz où l'une des voies sera utilisée pour le transit du gaz secondaire (ou bien mélange gaz secondaire/gaz adjacent) à refroidir, une autre voie sera par exemple utilisée pour faire transiter le gaz de désorption qui pourra provenir avantageusement d'un stockage de CO₂ liquide, et qui aura donc des frigories à libérer.

On pourra noter qu'il sera selon les cas, avantageux d'utiliser un échangeur à trois voies, en utilisant la troisième voie pour recycler le résidu de gaz non adsorbé obtenu en sortie de la bouteille, qui se trouve être relativement "froid".

Si l'on nomme "co-courant" le sens de circulation du gaz à l'intérieur de la bouteille durant l'étape d'adsorption (le résidu de gaz non adsorbé étant donc obtenu en sortie co-courant de la bouteille), alors la phase de désorption pourra s'effectuer par un balayage à co-courant ou bien à contre-courant.

Dans le cas d'un balayage de désorption à contre-courant : on obtient donc le gaz de production comprenant de l'ozone en sortie contre-courant de la bouteille.

Dans le cas d'un balayage de désorption à co-courant : on obtient donc le gaz de production comprenant de l'ozone en sortie co-courant de la bouteille.

On procédera avantageusement dans certains cas, selon le fonctionnement envisagé (par exemple en mode "lot" le plus souvent appelé mode "batch", cyclique..), après l'étape c), à une phase de régénération de l'adsorbant de la bouteille d'adsorption précédemment utilisée, par exemple par l'une des méthodes suivantes : chauffage de l'adsorbant, tirage sous vide ou encore balayage de l'adsorbant à l'aide d'un gaz outil (dans un sens quelconque de circulation du gaz à l'intérieur de la bouteille), gaz outil qui peut être par exemple un gaz inerte.

Le gaz obtenu pendant et à l'issue de cette phase de régénération, chargé en CO₂, sera avantageusement recyclé pour être réutilisé, par exemple pour la phase de désorption précédemment évoquée, ou encore pour la phase de conditionnement.

On voit alors que l'on peut être amené à mettre en oeuvre plusieurs bouteilles d'adsorbant, une des réserves d'adsorption étant par exemple en phase de conditionnement, alors qu'une autre réserve, déjà conditionnée est en phase d'adsorption, et qu'une troisième réserve, ayant précédemment subie la phase d'adsorption, se trouve en phase de désorption à l'aide d'un gaz de désorption, etc...

On se reportera, à ce sujet des multiples bouteilles intervenant classiquement dans des cycles d'adsorption/désorption, au document FR-2,580,271, déjà cité, qui évoque notamment l'utilisation périodique d'une bouteille pour la purification des gaz de purge.

Le procédé selon l'invention permet de façon modulable, de faire varier l'intensité du phénomène de concentration, donc de faire varier selon l'application d'oxydation envisagée, la concentration en ozone dans le gaz de production obtenu. On a pu montrer ainsi qu'il est possible d'obtenir des rapports de concentration d'au moins 2, voire au moins 4 ou plus (permettant ainsi d'atteindre des concentrations de plusieurs dizaines de %).

Le gaz adjacent selon l'invention est avantageusement du CO₂ pur, ou un mélange d'azote et de CO₂, ou un mélange d'oxygène et de CO₂, ou encore d'air et de CO₂, ou plus généralement un mélange comportant du CO₂ et tout autre gaz s'adsorbant très faiblement sur le support envisagé (tels que les gaz inertes).

Le gaz de production riche en ozone obtenu selon l'invention pourra indifféremment, selon le cas de chaque utilisateur, être dirigé directement vers un poste utilisateur, mais aussi par exemple :
- vers un stockage gazeux pour utilisation dans les heures qui suivent (on a évoqué plus haut l'effet significatif de stabilisation de l'ozone à l'état gazeux dans des mélanges comportant du CO₂);
- ou encore vers un récipient où le mélange CO₂/O₃ produit est cryopiégé (CO₂ liquéfié et O₃ stocké à l'état dissous dans ce CO₂), par exemple par la mise en oeuvre de conditions du type une pression de quelques bar (quelques 10⁵ Pa) et une température voisine de -50°C.

En effet, outre les travaux qu'a menés à bien la Demanderesse, évoqués plus haut dans cette demande, qui ont démontré l'influence positive de la présence de CO₂ sur la stabilisation de la molécule d'ozone dans un mélange gazeux (limitation de sa décomposition), la Demanderesse a également mené d'autres travaux qui ont démontré la grande solubilité de l'ozone dans du CO₂ liquide (en comparaison de ce qui a traditionnellement été testé et obtenu dans l'azote liquide ou encore dans des composés du type CFC, par exemple du Fréon).

Il a ainsi été démontré que, en comparaison des solubilités traditionnellement obtenues dans l'oxygène liquide, ou dans l'azote liquide, il était possible d'obtenir dans CO₂ liquide des solubilités améliorées (multipliées par des facteurs pouvant atteindre 5 voire 7), se rapprochant ainsi des bons résultats de solubilité de l'ozone dans certains CFC, CFC qui font l'objet, on le sait, de restrictions drastiques au niveau international pour des raisons d'environnement.

Ces résultats de solubilité ouvrent donc une possibilité supplémentaire et attractive de stockage de l'ozone produit.

Selon les applications considérées, il pourra être avantageux d'asservir la concentration en ozone obtenue dans le gaz de production. Cet asservissement pourra par exemple être obtenu par l'une des méthodes suivantes :
- par dilution, quand la concentration en ozone mesurée dans le gaz de production est supérieure à une consigne déterminée; - en agissant, selon la valeur mesurée de la concentration en ozone du gaz de production, sur le cycle suivant d'adsorption/désorption (en jouant par exemple sur la concentration d'oxygène à l'entrée de l'ozoneur, s'il constitue la source de gaz secondaire, sur la pression du gaz durant les phases d'adsorption et/ou de désorption, sur la concentration en CO₂ utilisée durant les phases d'adsorption et/ou de désorption, ou bien sur une combinaison de certaines de ces actions).

On pourrait également jouer sur le paramètre température (notamment sur le delta de température existant entre les phases d'adsorption et de désorption) mais ce moyen offre un temps de réaction plus élevé (inertie thermique).

Lorsque le gaz secondaire est issu d'un ozoneur, on disposera d'une pression de gaz secondaire généralement située dans l'intervalle allant de la pression atmosphérique à 2 bars absolus, mais cette pression peut dans certains cas être largement supérieure, atteignant même 10 bars.

Pour ce qui est du gaz de désorption, on utilisera généralement une pression comprise entre la pression atmosphérique et la pression du mélange gaz secondaire/gaz adjacent lors de la phase d'adsorption. Selon une des variantes de l'invention, la pression du gaz de désorption est supérieure à la pression du mélange gaz secondaire/gaz adjacent, cette variante permettant de combiner l'effet "concentrateur" obtenu selon l'invention, avec la pression, visant en cela certaines applications de l'ozone pour lesquelles une pression relativement élevée serait avantageuse.

L'invention concerne aussi une installation de traitement d'un gaz secondaire comprenant de l'ozone, comprenant en série le long d'au moins une ligne de gaz principale :
- une source de gaz secondaire à traiter;
- au moins une réserve d'adsorbant;
- une source de gaz de désorption qui comprend du CO₂, raccordée à la ligne principale par une ligne dite de désorption, en un point de la ligne principale situé entre la source de gaz secondaire et la réserve d'adsorbant,
   se caractérisant en ce qu'elle comprend de plus une source de gaz adjacent qui comprend du CO₂, raccordée à la ligne principale par une ligne dite adjacente, en un point de la ligne principale situé entre la source de gaz secondaire et la réserve.

La source de gaz secondaire pourra par exemple consister en un ozoneur produisant, à partir d'un gaz primaire comprenant de l'oxygène, le gaz secondaire, ou encore en un stockage intermédiaire du gaz secondaire comprenant de l'ozone.

Selon une des mises en oeuvre de l'invention, l'installation comprend par ailleurs des moyens de refroidissement d'un gaz, situés entre la source de gaz secondaire et la réserve d'adsorbant, en amont ou en aval du point de raccordement de la ligne de désorption sur la ligne principale, et en amont ou en aval du point de raccordement de la ligne adjacente sur la ligne principale.

Comme signalé précédemment, les moyens de refroidissement utilisés pourront consister par exemple en des moyens classiques tels que froid mécanique, échangeur sur liquide cryogénique, ou encore opération de détente sur une turbine. On pourra également envisager des échangeurs gaz/gaz à au moins deux voies où l'une des voies sera utilisée pour le transit du gaz à refroidir, une autre voie sera par exemple utilisée pour faire transiter le gaz de désorption qui pourra provenir avantageusement d'un stockage de CO₂ liquide, et qui aura donc des frigories à libérer.

L'installation se complétera, le cas échéant, par des moyens nécessaires à l'asservissement de la concentration en ozone obtenue dans le gaz de production, par rapport à une valeur de consigne déterminée : tels que analyseurs, vannerie, qu'elle soit manuelle ou automatique (notamment commandable à distance, par exemple via un automate), régulateurs de débit, permettant la dilution du gaz de production quand la concentration en ozone dans le gaz de production est supérieure à la consigne, ou autres moyens permettant d'agir par exemple sur au moins l'un des paramètres des cycles adsorption/désorption (la concentration d'oxygène dans le gaz primaire quand la source de gaz secondaire est un ozoneur, la concentration en CO₂ du gaz de désorption et/ou du gaz adjacent, la pression du gaz secondaire, la pression du gaz de désorption). On pourra ainsi utiliser une source variable de gaz primaire, ou encore faire varier les conditions de production d'un générateur d'oxygène par perméation ou adsorption, de façon à faire varier la concentration en oxygène dans le mélange obtenu en sortie de générateur.

De même, on pourra faire varier la composition du gaz adjacent par l'utilisation de différentes sources de CO₂, ou encore par dilution d'une même source de CO₂.

D'autres caractéristiques et avantages de la présente invention ressortiront de la description suivante de modes de réalisation, donnés à titre illustratif mais nullement limitatif, faits en relation avec les dessins annexés sur lesquels :
- la figure 1 est une vue schématique d'une installation convenant pour la mise en oeuvre du procédé selon l'invention;
- la figure 2 représente schématiquement un exemple de détail de l'opération de refroidissement dans le cas de l'utilisation d'un échangeur à deux voies;
- la figure 3 représente schématiquement l'évolution de la concentration d'ozone en sortie de bouteille d'adsorption en fonction du temps (au cours des phases d'adsorption et de désorption, la phase de désorption étant réalisée à l'azote);
- la figure 4 représente schématiquement l'évolution de la concentration d'ozone en sortie de bouteille d'adsorption en fonction du temps (au cours des phases d'adsorption et de désorption, la phase de désorption étant réalisée au CO₂ pur);
- la figure 5 représente l'évolution du pic de concentration en ozone en sortie de bouteille d'adsorption, en fonction de la concentration en CO₂ dans le gaz d'adsorption (la phase de désorption étant réalisée sous différentes concentrations en CO₂);

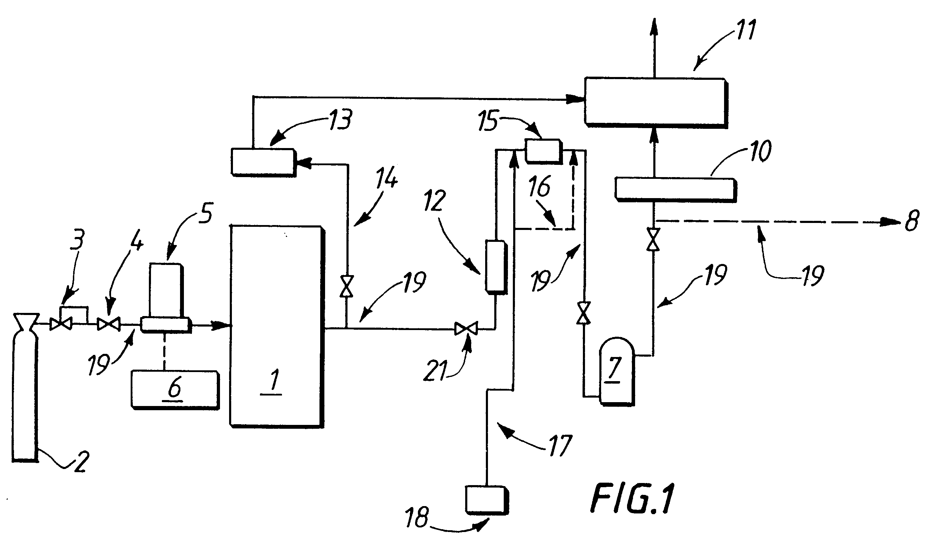

On reconnaît sur la figure 1 une source d'oxygène 2 (constituant le gaz primaire), schématisée pour le mode de réalisation représenté sous la forme d'une bouteille (stockage comprimé gazeux), par exemple d'air, d'oxygène, ou d'un mélange azote/oxygène, alimentant par une ligne principale 19, et via un système adéquat de détente, vannerie et autre contrôle de débit (ici détendeur 3, vanne 4 et régulateur de débit massique 5 contrôlé par son coffret de régulation 6) un ozoneur 1, du type mettant en oeuvre une décharge couronne.

La concentration en ozone, du gaz secondaire obtenu en sortie d'ozoneur 1, est le cas échéant mesurée sur l'analyseur 13, grâce à un piquage 14 situé sur la ligne principale, en sortie d'ozoneur. La sortie de gaz de l'analyseur est évacuée vers l'extérieur, préférentiellement via un système de détoxification 11 (par exemple un système à base d'alumine favorisant la décomposition de l'ozone).

Le gaz secondaire atteint alors, via un système de vannerie et de contrôle de débit (21, 12), un moyen 15 de refroidissement (par exemple un échangeur sur liquide cryogénique) où sa température est abaissée, préférentiellement dans la gamme [-80°C, 10°C], et plus préférentiellement dans la gamme [-80°C, 0°C].

On notera la présence d'une ligne de gaz de désorption 17, reliée en sa partie amont à une source 18 de gaz comprenant du CO₂, qui peut être comme représenté ici, reliée à la ligne principale en amont du système de refroidissement ou bien en aval de ce système par la dérivation 16.

Comme il apparaîtra clairement à l'homme du métier, cette schématisation de lignes 17 et 16, reliée à une source comprenant du CO₂, peut également être utilisée pour l'approvisionnement en gaz adjacent comportant du CO₂.

Par souci de simplification et de lisibilité de la figure, on a donc utilisé une seule portion d'installation (source 18 comportant du CO₂, lignes 16/17) pour l'apport de gaz adjacent et de gaz de désorption, le raccordement de ces approvisionnements se faisant donc en amont ou en aval du moyen de refroidissement 15.

La source 18 de gaz de désorption et/ou de gaz adjacent, sera avantageusement un stockage de CO₂ liquide, dont le gaz froid émis pourra avantageusement donner ses frigories.

Le gaz secondaire (ou mélange gaz secondaire/gaz adjacent) froid, obtenu en sortie de moyen de refroidissement 15, est alors dirigé, toujours le long de la ligne principale 19, vers une bouteille d'adsorption 7, contenant un gel de silice, où tout ou partie de l'ozone le composant est adsorbé, le résidu de gaz non adsorbé est, sur l'exemple représenté, évacué vers l'extérieur, après avoir subi un passage dans le système de détoxification 11, au besoin en passant par une étape d'analyse 10.

Lors de la phase suivante de désorption, à l'aide du gaz de désorption 18, le gaz de production en résultant à la sortie de bouteille 7 est envoyé via la partie aval de la ligne 19, vers le point 8, qui pourra représenter selon les cas, un poste utilisateur, un stockage gazeux pour utilisation dans les heures qui suivent (on a évoqué plus haut l'effet significatif de stabilisation de l'ozone à l'état gazeux dans des mélanges comportant du CO₂), ou encore vers un récipient où le mélange CO₂/O₃ produit est cryopiégé.

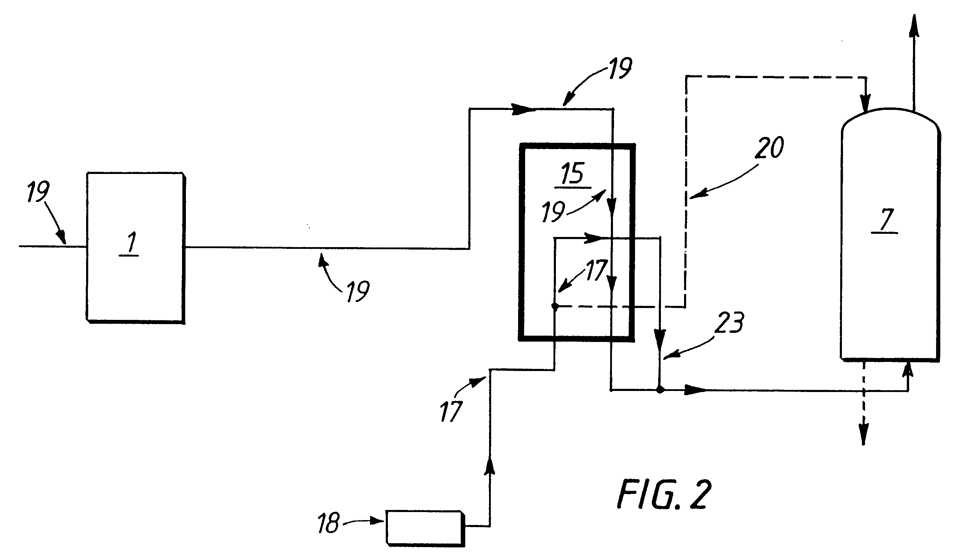

La figure 2 illustre le cas particulier où le moyen de refroidissement 15 utilisé est un échangeur gaz/gaz, dont une des voies est utilisée pour faire transiter, via la ligne 19, le gaz secondaire issu de l'ozoneur 1, avant que ce mélange n'atteigne la bouteille d'adsorption 7, une autre voie étant utilisée pour faire transiter la ligne 17 de désorption (et/ou de gaz adjacent), qui pour le cas représenté est reliée à un stockage 18 de CO₂ liquide (dont les conditions de stockage typiques sont -20°C, 20 bar), le gaz froid en résultant pouvant alors libérer ses frigories dans l'échangeur, au bénéfice du gaz secondaire.

La ligne pointillée 20 représente le gaz de désorption qui est envoyé vers le haut de la colonne 7. La ligne continue 23, représente l'apport de gaz adjacent dans le gaz secondaire, en aval de l'échangeur, pour l'étape d'adsorption.

Il n'a pas été représenté, pour cet exemple, d'échangeur à trois voies, mais on comprendra, comme déjà signalé plus haut, qu'un tel échangeur à trois voies peut dans certains cas être utilisé pour faire transiter, en plus, le résidu de gaz non adsorbé récupéré en sortie de la bouteille d'adsorption.

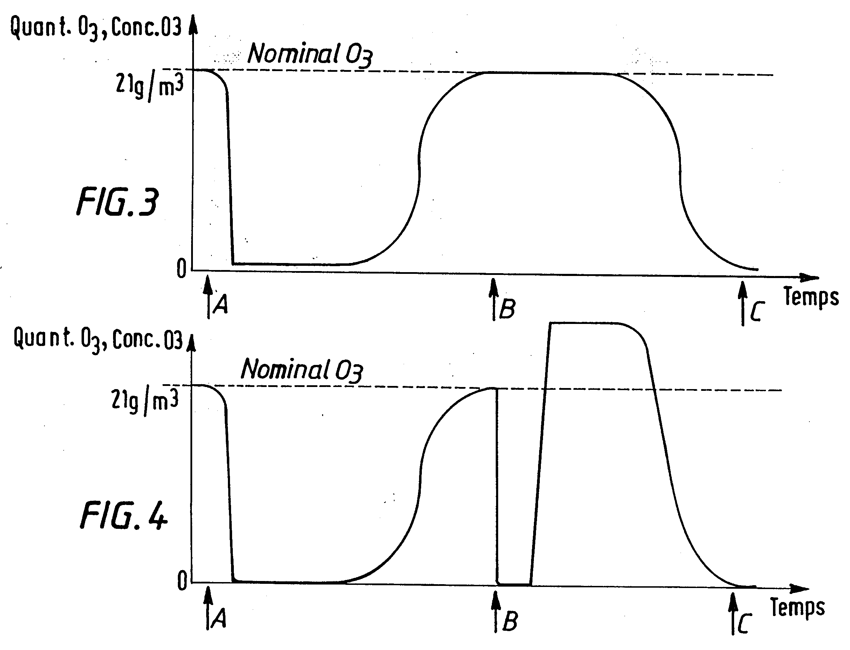

La figure 3 illustre de façon schématique, l'évolution de la concentration d'ozone (en ordonnée) en sortie de bouteille d'adsorption en fonction du temps en abscisse (donc au cours des phases d'adsorption et de désorption), la phase de désorption étant réalisée classiquement à l'azote (ou encore l'air).

La figure peut également se lire en terme de "quantité d'ozone obtenue " (produit à tout moment de la concentration et du débit).

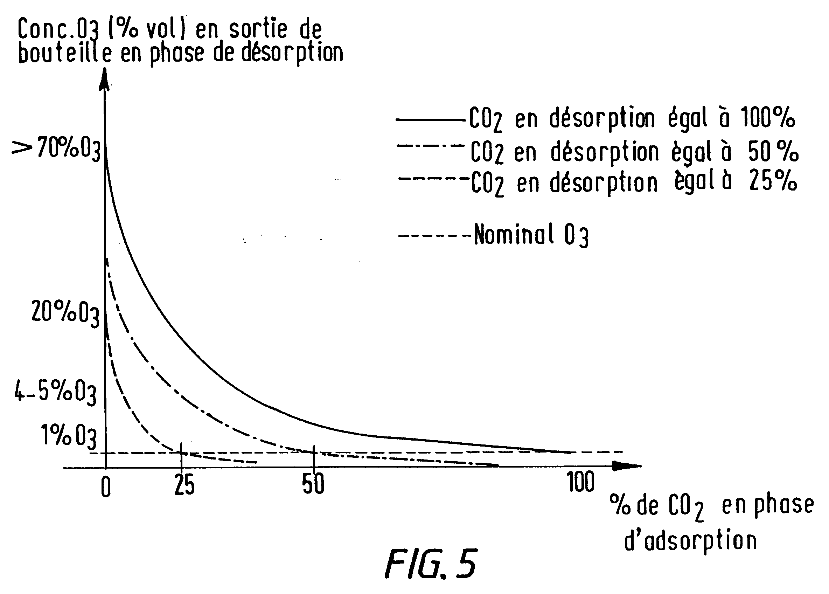

Ces essais (rapportés en figure 3), comme ceux rapportés plus loin dans le cadre des figures 4 et 5, ont été réalisés à l'aide d'une installation telle que celle décrite dans le cadre de la figure 1, dans les conditions suivantes (le mélange gazeux à adsorber ne subissant pas ici de refroidissement):
- une colonne d'adsorption en acier inoxydable 304L, contenant une charge d'environ 1 Kg de gel de silice (de marque GRACE™, référence GRACE 125) d'une granulométrie variant de 1 à 3 mm;
- phase d'adsorption : un mélange secondaire O₂/O₃ à 1% volumique d'ozone (avec dans le cas des figures 4 et 5 l'adjonction d'une composante adjacente de CO₂) de débit global de l'ordre de 40 Nl/h, à une température voisine de la température ambiante et à une pression voisine de 1,1 10⁵ Pa absolus; durée de cette phase : de 35 à 40 mn;
- phase de désorption : qu'il s'agisse d'azote (figure 3) ou de mélanges comprenant du CO₂, voire à l'aide de CO₂ pur (figures suivantes), cette phase mettait en oeuvre un débit de l'ordre de 40 Nl/h, à une pression variant légèrement au cours de cette phase entre la pression atmosphérique et environ 1,1 10⁵ Pa absolus; durée de cette phase : 25 à 30 mn;
- on a procédé pour les essais rapportés en figures 4 et 5, lors du démarrage, avant la phase d'adsorption b), à une étape de conditionnement de l'adsorbant à l'aide d'un mélange contenant, selon les cas, jusqu'à 75 % de CO₂ dans l'oxygène, à la température ambiante, à une pression voisine de 1,1 10⁵ Pa absolus, pour un débit voisin de 40 Nl/h. La température de l'adsorbant s'élève légèrement durant cette phase (qui dure quelques dizaines de minutes), pour redescendre un peu au dessus de la température ambiante;

Sur la figure 3, le point fléché A localise schématiquement dans le cycle, le début de l'adsorption, le point fléché B la fin de l'adsorption et le début de la désorption à l'azote, et le point C la fin de la phase de désorption.

On constate alors clairement sur cette figure l'absence de phénomène de concentration, puisque l'on atteint durant la désorption, une concentration en ozone qui né dépasse pas la concentration nominale (21g/m³ ici) initialement présente dans le gaz secondaire issu de l'ozoneur.

On notera également la chute rapide après le point A de la concentration en ozone détectée en sortie (puisque l'ozone s'adsorbe), jusqu'à atteindre une concentration nulle ou à tout le moins difficilement détectable.

Dans le cas de la figure 4, où pour le même nominal, on met en oeuvre cette fois, une phase de désorption au CO₂ pur (la température augmentant légèrement au passage du front), on observe clairement un pic de concentration en ozone durant la phase de désorption, s'étendant largement au dessus du nominal.

Comme déjà signalé, la valeur de ce pic de concentration (depuis quelques % jusqu'à quelques dizaines de %), mais aussi sa forme, pourront être contrôlées (selon les applications visées), en jouant notamment sur les paramètres déjà listés.

Ici encore pour faciliter la lecture du diagramme, le point fléché A localise dans le cycle le début de l'adsorption, le point fléché B la fin de l'adsorption et le début de la désorption au CO₂ pur, et le point C la fin de la phase de désorption.

De même, ici encore, comme développé plus en détails ci-dessous, ce diagramme schématique peut selon les portions de courbe, se lire en terme de "concentration d'ozone", ou en terme de "quantité d'ozone".

On note sur cette figure 4, l'existence, à partir du point B, d'une sorte de courte période transitoire où l'on observe l'absence de détection d'ozone (cette période durant ici de l'ordre de 7 à 8 mn), suivant le déclenchement de la phase de désorption et avant de monter vers le pic.

Durant cette période transitoire, on récupère en sortie de bouteille une quantité extrêmement faible d'ozone car un débit très faible.

Ce phénomène confirme l'effet évoqué plus haut de "piston", le CO₂ s'adsorbant lui-même désorbe au fur et à mesure l'ozone précédemment adsorbé, poussant ainsi une espèce de front d'ozone qui progresse à l'intérieur de la réserve d'adsorbant.

On voit donc que si le reste de cette figure 4 peut se lire sans difficulté tant en terme de "concentration" qu'en terme de "quantité", l'évolution de la courbe au niveau de la période transitoire doit, pour être comprise, plutôt être lue en terme de quantité d'ozone produite.

Les caractéristiques de cet effet transitoire observé ici entre le début de la phase de désorption et le pic de concentration sera notamment fonction du rapport entre la concentration en CO₂ du gaz de désorption et la concentration en CO₂ du mélange gaz secondaire/gaz adjacent.

La figure 5 illustre alors l'évolution du pic de concentration en ozone en sortie de bouteille d'adsorption, en fonction (en abscisse) de la concentration en CO₂ dans le mélange gazeux d'adsorption (via l'apport de gaz adjacent), la phase de désorption étant réalisée sous différentes concentrations en CO₂ dans l'oxygène (25%, 50%, 100%).

Ces évolutions illustrent l'influence d'une présence importante de CO₂ dans le gaz de désorption.

Compte tenu de ces résultats, qui sont bien entendu représentatifs des conditions utilisées de pressions d'adsorption et de désorption, on s'attachera, lorsque CO₂ est également utilisé en phase d'adsorption, à assurer préférentiellement un rapport Concentration CO₂ dans gaz de désorption/Concentration CO₂ dans le mélange de gaz secondaire et de gaz adjacent supérieur à 1.

Comme il apparaîtra clairement à l'homme du métier au vu de toutes les variantes de l'invention qui viennent d'être décrites, le gaz de production obtenu pourra être de composition très variée, par exemple selon les compositions de gaz adjacent et de gaz de désorption utilisées. Il pourra ainsi être binaire (O₃/CO₂), ou ternaire (par exemple O₃/CO₂/O₂ ou encore O₃/CO₂/N₂...) voire plus complexe.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art.

## Revendications

1. Procédé de traitement d'un gaz secondaire comprenant de l'ozone, comprenant les étapes suivantes :
a) on ajoute au gaz secondaire un gaz adjacent (18) comprenant du CO₂;
b) on fait passer le mélange de gaz secondaire et de gaz adjacent obtenu en fin d'étape a) dans au moins une réserve (7) d'adsorbant, où l'ozone est adsorbé en tout ou partie;
c) on balaye ladite réserve d'adsorbant, à l'aide d'un gaz de désorption (18) comprenant du CO₂, pour obtenir en sortie de ladite réserve un gaz de production comprenant de l'ozone, la concentration en ozone dudit gaz de production étant supérieure à la concentration en ozone dudit gaz secondaire.

2. Procédé selon la revendication 1, caractérisé en ce que préalablement à l'étape b), le dit adsorbant a subi une étape de conditionnement au cours de laquelle il a été balayé à l'aide d'un gaz de conditionnement comprenant du CO₂.

3. Procédé selon l'une des revendications précédentes, caractérisé en ce que le rapport entre la concentration en ozone dudit gaz de production et la concentration en ozone dudit gaz secondaire est d'au moins 2.

4. Procédé selon l'une des revendications précédentes, caractérisé en ce que le rapport entre la concentration en CO₂ du gaz de désorption et la concentration en CO₂ du mélange constitué du gaz secondaire et du gaz adjacent est supérieur à 1.

5. Procédé selon l'une des revendications précédentes, caractérisé en ce que la pression du gaz de désorption est supérieure à la pression du mélange de gaz secondaire et de gaz adjacent.

6. Procédé selon l'une des revendications précédentes, caractérisé en ce que ledit gaz adjacent est compris dans l'ensemble constitué de : CO₂ pur, les mélanges N₂/CO₂, les mélanges oxygène/CO₂ et les mélanges air/CO₂.

7. Procédé selon l'une des revendications précédentes, caractérisé en ce que l'on effectue une opération de refroidissement (15) dudit gaz secondaire, avant son arrivée dans ladite réserve.

8. Procédé selon la revendication 7, caractérisé en ce que la température du gaz secondaire refroidi est comprise dans l'intervalle [-80°C, 10°C]

9. Procédé selon l'une des revendications 7 ou 8, caractérisé en ce que la dite opération de refroidissement est effectuée après l'étape a) d'ajout de gaz adjacent.

10. Procédé selon l'une des revendications 7 à 9, caractérisé en ce que l'étape de refroidissement (15) du gaz secondaire, ou du mélange de gaz secondaire et de gaz adjacent, est réalisée par passage dans un échangeur à au moins deux voies, la seconde voie étant utilisée pour faire transiter le dit gaz de désorption (17,18).

11. Procédé selon la revendication 10, caractérisé en ce que le dit échangeur est un échangeur à au moins trois voies, la troisième voie étant utilisée pour faire transiter le résidu de mélange de gaz secondaire et de gaz adjacent non adsorbé récupéré en sortie de la dite réserve et recyclé vers l'échangeur.

12. Procédé selon l'une des revendications précédentes, caractérisé en ce que l'on asservit la concentration en ozone du gaz de production, par rapport à une valeur de consigne déterminée.

13. Procédé selon la revendication 12, caractérisé en ce que l'on asservit la dite concentration en ozone du gaz de production par dilution.

14. Procédé selon la revendication 12, caractérisé en ce que l'on asservit la dite concentration en ozone du gaz de production en agissant sur au moins l'un des paramètres suivants : la concentration en CO₂ du gaz de désorption et/ou du gaz adjacent, la pression du gaz secondaire, la pression du gaz de désorption.

15. Procédé selon l'une des revendications précédentes, caractérisé en ce que le dit gaz secondaire est obtenu en sortie d'un ozoneur, où a été traité un gaz primaire (2) comprenant de l'oxygène.

16. Procédé selon la revendication 15, caractérisé en ce que l'on asservit la concentration en ozone du gaz de production en agissant sur la concentration d'oxygène dans le dit gaz primaire.

17. Procédé selon l'une des revendications précédentes, caractérisé en ce que ledit adsorbant est un gel de silice.

18. Procédé selon l'une des revendications précédentes, caractérisé en ce que le gaz de production obtenu est dirigé vers un poste utilisateur, ou bien stocké à l'état gazeux, ou bien dirigé vers un stockage de CO₂ liquide où il est dissous (8).

19. Procédé selon l'une des revendications précédentes, caractérisé en ce que le dit balayage à l'aide du gaz de désorption est réalisé à co-courant du sens de circulation du mélange de gaz secondaire et de gaz adjacent dans la réserve, ou à contre-courant de ce sens de circulation du mélange de gaz secondaire et de gaz adjacent dans la réserve.

20. Installation de traitement d'un gaz secondaire comprenant de l'ozone, convenant pour la mise en oeuvre de l'une quelconque des revendications précédentes, comprenant en série le long d'au moins une ligne de gaz principale :
- une source de gaz secondaire à traiter;
- au moins une réserve (7) d'adsorbant;
- une source (18) de gaz de désorption qui comprend du CO₂, raccordée par une ligne (16, 17) dite de désorption, à un point de la ligne principale situé entre la source de gaz secondaire et la dite réserve d'adsorbant (7), ou bien raccordée à ladite réserve, pour permettre, selon les cas, un balayage à co-courant ou à contre-courant de la réserve par le gaz de désorption,
caractérisée en ce qu'elle comprend de plus une source de gaz adjacent (18) qui comprend du CO₂, raccordée à la ligne principale par une ligne dite adjacente (16, 17), en un point de la ligne principale situé entre la source de gaz secondaire et la dite réserve, afin de permettre d'ajouter au gaz secondaire à traiter, avant son arrivée dans ladite réserve, dudit gaz adjacent.

21. Installation selon la revendication 20, caractérisée en ce que des moyens de refroidissement (15) de gaz sont disposés entre la source de gaz secondaire et la dite réserve d'adsorbant (7), en amont ou en aval du point de raccordement de la ligne de désorption sur la ligne principale, en amont ou en aval du point de raccordement de la ligne adjacente sur la ligne principale.

22. Installation selon la revendication 21, caractérisée en ce que les dits moyens de refroidissement (15) sont constitués par un échangeur à au moins deux voies, l'une de ces voies étant apte à faire transiter le dit gaz secondaire, l'autre voie étant apte à faire transiter le dit gaz de désorption.

23. Installation selon l'une des revendications 20 à 22, caractérisée en ce que ladite source de gaz secondaire est un ozoneur (1) produisant, à partir d'un gaz primaire comprenant de l'oxygène, ledit gaz secondaire.

24. Installation selon l'une des revendications 20 à 23, caractérisée en ce que la source (18) de gaz de désorption et/ou de gaz adjacent est un stockage de CO₂ liquide.

25. Installation selon l'une des revendications 20 à 23, caractérisée en ce que la source de gaz de désorption est constituée par du CO₂ pur.

## Claims

1. Process for treating a secondary gas comprising ozone, comprising the following steps:
a) an adjacent gas (18) comprising CO₂ is added to the secondary gas;
b) the mixture of secondary gas and of adjacent gas obtained at the end of step a) is passed into at least one adsorbent tank (7) where some or all of the ozone is adsorbed;
c) the said adsorbent tank is flushed using a desorption gas (18) comprising CO₂, in order to obtain a production gas comprising ozone at the outlet of the said tank, the ozone concentration in the said production gas being greater than the ozone concentration in the said secondary gas.

2. Process according to Claim 1, characterized in that, prior to step b), the said adsorbent has undergone a conditioning step during which it was flushed using a conditioning gas comprising CO₂.

3. Process according to one of the preceding claims, characterized in that the ratio between the ozone concentration in the said production gas and the ozone concentration in the said secondary gas is at least 2.

4. Process according to one of the preceding claims, characterized in that the ratio between the CO₂ concentration in the desorption gas and the CO₂ concentration in the mixture consisting of the secondary gas and of the adjacent gas is greater than 1.

5. Process according to one of the preceding claims, characterized in that the pressure of the desorption gas is greater than the pressure of the mixture of secondary gas and of adjacent gas.

6. Process according to one of the preceding claims, characterized in that the said adjacent gas is one of the group consisting of: pure CO₂, N₂/CO₂ mixtures, oxygen/CO₂ mixtures and air/CO₂ mixtures.

7. Process according to one of the preceding claims, characterized in that an operation (15) of cooling the said secondary gas is carried out before it arrives in the said tank.

8. Process according to Claim 7, characterized in that the temperature of the cooled secondary gas lies in the interval [-80°C, 10°C].

9. Process according to either of Claims 7 and 8, characterized in that the said cooling operation is carried out after the step a) of adding adjacent gas.

10. Process according to one of Claims 7 to 9, characterized in that the step (15) of cooling the secondary gas, or the mixture of secondary gas and of adjacent gas, is carried out by passing it through an exchanger with at least two channels, the second channel being used to pass the said desorption gas (17, 18) through it.

11. Process according to Claim 10, characterized in that the said exchanger is an exchanger with at least three channels, the third channel being used to pass through it the residue of the mixture of secondary gas and of adjacent gas which is not absorbed and has been recovered at the outlet of the said tank and recycled to the exchanger.

12. Process according to one of the preceding claims, characterized in that the ozone concentration in the production gas is slaved to a specific set point value.

13. Process according to Claim 12, characterized in that the said ozone concentration in the production gas is slaved by dilution.

14. Process according to Claim 12, characterized in that the said ozone concentration in the production gas is slaved by controlling at least one of the following parameters: the CO₂ concentration in the desorption gas and/or in the adjacent gas, the pressure of the secondary gas, the pressure of the desorption gas.

15. Process according to one of the preceding claims, characterized in that the said secondary gas is obtained at the outlet of an ozonizer, where a primary gas (2) comprising oxygen is treated.

16. Process according to Claim 15, characterized in that the ozone concentration in the production gas is slaved by controlling the oxygen concentration in the said primary gas.

17. Process according to one of the preceding claims, characterized in that the said adsorbent is a silica gel.

18. Process according to one of the preceding claims, characterized in that the production gas which is obtained is sent to a user station, or stored in the gas state, or sent to a liquid CO₂ store where it is dissolved (8).

19. Process according to one of the preceding claims, characterized in that the said flushing using the desorption gas is carried out in cocurrent with the direction in which the mixture of secondary gas and of adjacent gas flows through the tank, or in countercurrent with this direction in which the mixture of secondary gas and of adjacent gas flows through the tank.

20. Plant for treating a secondary gas comprising ozone, suitable for implementing any one of the preceding claims, comprising, in series along at least one main gas line:
- a source of secondary gas to be treated;
- at least one adsorbent tank (7);
- a source (18) of desorption gas which comprises CO₂, the source being connected by a so-called desorption line (16, 17) to a point on the main line located between the secondary gas source and the said adsorbent tank (7), or connected to the said tank, in order to permit cocurrent or countercurrent flushing of the tank with the desorption gas, as appropriate
characterized in that it furthermore comprises a source of adjacent gas (18) which comprises CO₂, this source being connected to the main line by a so-called adjacent line (16, 17), at a point on the main line located between the secondary gas source and the said tank, in order to make it possible to add the said adjacent gas to the secondary gas to be treated, before the latter arrives in the said tank.

21. Plant according to Claim 20, characterized in that means (15) for cooling the gas are arranged between the secondary gas source and the said adsorbent tank (7), upstream or downstream of the point where the desorption line is connected to the main line, and upstream or downstream of the point where the adjacent line is connected to the main line.

22. Plant according to Claim 21, characterized in that the said cooling means (15) consist of an exchanger having at least two channels, one of these channels being designed to pass the said secondary gas through it, and the other channel being designed to pass the said desorption gas through it.

23. Plant according to one of Claims 20 to 22, characterized in that the said secondary gas source is an ozonizer (1) which produces the said secondary gas from a primary gas comprising oxygen.

24. Plant according to one of Claims 20 to 23, characterized in that the source (18) of desorption gas and/or adjacent gas is a liquid CO₂ store.

25. Plant according to one of Claims 20 to 23, characterized in that the desorption gas source consists of pure CO₂.

## Patentansprüche

1. Verfahren zur Behandlung eines Ozon enthaltenden Sekundärgases, das die folgenden Schritte umfaßt:
a) Es wird dem Sekundärgas ein CO₂ enthaltendes Nebengas (18) zugesetzt;
b) das am Ende von Schritt a) erhaltene Gemisch von Sekundärgas und Nebengas wird in wenigstens eine Adsorptionsmittel-Bevorratung (7) geleitet, in der das Ozon ganz oder teilweise adsorbiert wird;
c) die Adsorptionsmittel-Bevorratung wird mit Hilfe eines CO₂ enthaltenden Desorptionsgases (18) gespült, um am Auslaß der Bevorratung ein Ozon enthaltendes Produktionsgas zu erhalten, wobei die Ozonkonzentration des Produktionsgases höher als die Ozonkonzentration des Sekundärgases ist.

2. Verfahren nach Anspruch 1, dadurch gekennzeichnet, daß vor dem Schritt b) das Adsorptionsmittel einem Aufbereitungsschritt unterzogen wurde, in dessen Verlauf es mit Hilfe eines CO₂ enthaltenden Aufbereitungsgases gespült wurde.

3. Verfahren nach einem der vorangehenden Ansprüche, dadurch gekennzeichnet, daß das Verhältnis von Ozonkonzentration des Produktionsgases und Ozonkonzentration des Sekundärgases wenigstens 2 ist.

4. Verfahren nach einem der vorangehenden Ansprüche, dadurch gekennzeichnet, daß das Verhältnis von CO₂-Konzentration des Desorptionsgases und CO₂-Konzentration des aus Sekundärgas und Nebengas gebildeten Gemisches größer als 1 ist.

5. Verfahren nach einem der vorangehenden Ansprüche, dadurch gekennzeichnet, daß der Druck des Desorptionsgases höher als der Druck des Gemisches von Sekundärgas und Nebengas ist.

6. Verfahren nach einem der vorangehenden Ansprüche, dadurch gekennzeichnet, daß das Nebengas von der aus reinem CO₂, den Gemischen N₂/CO₂, den Gemischen Sauerstoff/CO₂ und den Gemischen Luft/CO₂ gebildeten Gruppe umfaßt wird.

7. Verfahren nach einem der vorangehenden Ansprüche, dadurch gekennzeichnet, daß ein Arbeitsgang zur Kühlung (15) des Sekundärgases vor dessen Eintritt in die Bevorratung durchgeführt wird.

8. Verfahren nach Anspruch 7, dadurch gekennzeichnet, daß die Temperatur des gekühlten Sekundärgases im Bereich [-80°C, 10°C] liegt.

9. Verfahren nach einem der Ansprüche 7 oder 8, dadurch gekennzeichnet, daß der Kühlungs-Arbeitsgang nach dem Schritt a) des Nebengas-Zusetzens durchgeführt wird.

10. Verfahren nach einem der Ansprüche 7 bis 9, dadurch gekennzeichnet, daß der Schritt zur Kühlung (15) des Sekundärgases oder des Gemisches von Sekundärgas und Nebengas durch Durchleiten in einem Austauscher mit wenigstens zwei Wegen ausgeführt wird, wobei der zweite Weg zum Durchleiten des Desorptionsgases (17, 18) benutzt wird.

11. Verfahren nach Anspruch 10, dadurch gekennzeichnet, daß der Austauscher ein Austauscher mit wenigstens drei Wegen ist, wobei der dritte Weg zum Durchleiten des nicht adsorbierten Restgemisches von Sekundärgas und Nebengas benutzt wird, das am Auslaß der Bevorratung erhalten wird und zum Austauscher zurückgeführt wird.

12. Verfahren nach einem der vorangehenden Ansprüche, dadurch gekennzeichnet, daß die Ozonkonzentration des Produktionsgases im Verhältnis zu einem festgelegten Sollwert gesteuert wird.

13. Verfahren nach Anspruch 12, dadurch gekennzeichnet, daß die Ozonkonzentration des Produktionsgases durch Verdünnung gesteuert wird.

14. Verfahren nach Anspruch 12, dadurch gekennzeichnet, daß die Ozonkonzentration des Produktionsgases durch Einwirken auf wenigstens einen der folgenden Parameter gesteuert wird: die CO₂-Konzentration des Desorptions- und/oder Nebengases, den Druck des Sekundärgases, den Druck des Desorptionsgases.

15. Verfahren nach einem der vorangehenden Ansprüche, dadurch gekennzeichnet, daß das Sekundärgas am Auslaß eines Ozonisators, in dem ein Sauerstoff enthaltendes Primärgas (2) behandelt wurde, erhalten wird.

16. Verfahren nach Anspruch 15, dadurch gekennzeichnet, daß die Ozonkonzentration des Produktionsgases durch Einwirken auf die Sauerstoffkonzentration in dem Primärgas gesteuert wird.

17. Verfahren nach einem der vorangehenden Ansprüche, dadurch gekennzeichnet, daß das Adsorptionsmittel ein Siliciumdioxid-Gel ist.

18. Verfahren nach einem der vorangehenden Ansprüche, dadurch gekennzeichnet, daß das erhaltene Produktionsgas zu einer Anwendungsstelle geleitet wird oder auch in gasförmigem Zustand gelagert wird oder auch zu einer Flüssig-CO₂-Lagerung geleitet wird, in der es gelöst wird (8).

19. Verfahren nach einem der vorangehenden Ansprüche, dadurch gekennzeichnet, daß die Spülung mit Hilfe des Desorptionsgases im Gleichstrom zur Zirkulationsrichtung des Gemisches von Sekundärgas und Nebengas in der Bevorratung oder im Gegenstrom zur Zirkulationsrichtung des Gemisches von Sekundärgas und Nebengas in der Bevorratung ausgeführt wird.

20. Vorrichtung zur Behandlung eines Ozon enthaltenden Sekundärgases, die zur Ausführung eines beliebigen der vorangehenden Ansprüche geeignet ist, bestehend längs wenigstens einer Hauptgasleitung in Reihe aus:
- einer Quelle von zu behandelndem Sekundärgas;
- wenigstens einer Adsorptionsmittel-Bevorratung (7);
- einer Quelle (18) von CO₂ enthaltendem Desorptionsgas, welche durch eine sogenannte Desorptions-Leitung (16, 17) an einer Stelle der Hauptleitung, die sich zwischen der Sekundärgasquelle und der Adsorptionsmittel-Bevorratung (7) befindet, verbunden ist, oder auch mit der Bevorratung verbunden ist, um je nach Fall eine Gleichstrom- oder Gegenstrom-Spülung der Bevorratung mittels des Desorptionsgases zu ermöglichen,
dadurch gekennzeichnet, daß sie weiterhin eine CO₂ enthaltende Nebengasquelle (18) aufweist, die mit der Hauptleitung durch eine sogenannte Nebenleitung (16, 17) an einer Stelle der Hauptleitung, die sich zwischen der Sekundärgasquelle und der Bevorratung befindet, verbunden ist, um zu ermöglichen, daß dem zu behandelnden Sekundärgas vor dessen Eintritt in die Bevorratung das Nebengas zugesetzt wird.

21. Vorrichtung nach Anspruch 20, dadurch gekennzeichnet, daß Mittel zur Gaskühlung (15) zwischen der Sekundärgasquelle und der Adsorptionsmittel-Bevorratung (7) stromaufwärts oder stromabwärts von der Verbindungsstelle der Desorptionsleitung auf der Hauptleitung und stromaufwärts oder stromabwärts von der Verbindungstelle der Nebenleitung auf der Hauptleitung angeordnet sind.

22. Vorrichtung nach Anspruch 21, dadurch gekennzeichnet, daß die Kühlungsmittel (15) aus einem Austauscher mit wenigstens zwei Wegen gebildet werden, wobei einer dieser Wege zur Durchleitung des Sekundärgases geeignet ist und der andere Weg zur Durchleitung des Desorptionsgas geeignet ist.

23. Vorrichtung nach einem der Ansprüche 20 bis 22, dadurch gekennzeichnet, daß die Sekundärgasquelle ein Ozonisator (1) ist, der, ausgehend von einem Sauerstoff enthaltenden Primärgas, das Sekundärgas erzeugt.

24. Vorrichtung nach einem der Ansprüche 20 bis 23, dadurch gekennzeichnet, daß die Quelle (18) des Desorptionsgases und/oder des Nebengases eine Lagerung von flüssigem CO₂ ist.

25. Vorrichtung nach einem der Ansprüche 20 bis 23, dadurch gekennzeichnet, daß die Quelle des Desorptionsgases aus einem CO₂ gebildet wird.
